# EUROPÄISCHE PATENTSCHRIFT

(11) **EP 1 390 635 B1**
(45) Veröffentlichungstag und Bekanntmachung des Hinweises auf die Patenterteilung: **13.09.2006**
(21) Anmeldenummer: 02740334.4
(22) Anmeldetag: 10.05.2002
(51) Int. Cl.: F16D 49/00

(54) **BANDBREMSE**
BAND BRAKE
FREIN A BANDE

(30) Priorität: 15.05.2001 DE 10123563
(43) Veröffentlichungstag der Anmeldung: 25.02.2004
(73) Patentinhaber: ROBERT BOSCH GMBH, 70442 Stuttgart (DE)
(72) Erfinder: BAUMANN, Dietmar, 71282 Hemmingen (DE); SCHMIDT, Hanniel, 76307 Karlsbad (DE); VOLLERT, Herbert, 71665 Vaihingen/Enz (DE); KELLER, Frieder, 76698 Ubstadt-Weiher (DE)
(86) Internationale Anmeldenummer: PCT/DE2002/001690
(87) Internationale Veröffentlichungsnummer: WO 2002/093034

(56) Entgegenhaltungen:
- US-A- 3 638 766
- US-A- 3 841 447
- US-A- 4 182 436
- US-A- 5 947 866

## Beschreibung

Die Erfindung betrifft eine Bandbremse mit den Merkmalen des Oberbegriffs des Anspruchs 1, die zum Einsatz in Kraftfahrzeugen vorgesehen ist.

Bandbremsen sind an sich bekannt. Sie weisen einen zylindrischen Bremskörper, üblicherweise in Form einer Bremstrommel, auf, um den ein Bremsband geschlungen ist. Das Bremsband umschlingt den Bremskörper üblicherweise um ungefähr dreiviertel des Umfangs. Die beiden Bandenden stehen tangential vom Bremskörper ab. Zur Betätigung der Bandbremsen ist mit einer Spanneinrichtung eine Bandzugkraft auf mindestens eines der beiden Enden des Bremsbandes ausübbar. Eine Bremskraft der Bandbremse ist außer vom Reibungskoeffizienten zwischen dem Bremsband und dem Bremskörper und der Bandzugkraft vom Umschlingungswinkel des Bremsbandes um den Bremskörper abhängig. Auf Grund des großen Umschlingungswinkels ergibt sich eine große Bremskraft bei niedriger Bandzugkraft, die einer Betätigungskraft der Bandbremse entspricht. Bandbremsen haben somit den Vorteil einer hohen Bremskraft bei niedriger Betätigungskraft.

Trotz ihrer hohen Bremskraft bei niedriger Betätigungskraft werden Bandbremsen in Kraftfahrzeugen bislang praktisch nicht eingesetzt. Ein Grund hierfür dürften Bremskraftschwankungen bekannter Bandbremsen sein, die sie für eine Verwendung in Kraftfahrzeugen ungeeignet erscheinen lassen.

Aus der US-A-3 841 447 ist eine Bandbremse für einen Traktor bekannt, die als zylindrischen Bremskörper eine Bremstrommel mit einem Reibbremsbelag an ihrem Umfang aufweist, um den ein Bremsband geschlungen ist. Zum Betätigen der Bandbremse, d.h. zum Spannen des Bremsbandes sind beide Enden des Bremsbandes mit Winkelhebeln verbunden, die an einem Chassis schwenkbar gelagert sind und die über Zugstangen gemeinsam und gegenläufig schwenkbar sind. Durch Zug auf die Zugstangen werden die Schwenkhebel gegenläufig verschwenkt und spannen das Bremsband. Die bekannte Bandbremse ist für beide Drehrichtungen der Bremstrommel gleichermaßen geeignet.

### Erläuterung und Vorteile der Erfindung

Die erfindungsgemäße Bandbremse mit den Merkmalen des Anspruchs 1 weist einen Reibbremsbelag auf, der außen auf einem Umfang des Bremskörpers angebracht ist. Das Bremsband umschlingt den Reibbremsbelag und legt sich reibend an diesen an, wenn das Bremsband zur Betätigung der Bandbremse gespannt wird. Durch das Anbringen eines Reibbremsbelags auf dem Umfang des Bremskörpers lassen sich, insbesondere wenn der Reibbremsbelag und das Bremsband aufeinander abgestimmt sind, Bremskraftschwankungen verringern. Auf Grund einer großen Reibfläche ist eine Abnutzung des Reibbremsbelags gering und die Lebensdauer dementsprechend hoch. Beim Bremsen entstehende Wärme wird durch den außen auf dem Bremskörper angeordneten Reibbremsbelag und das außen liegende Bremsband gut abgeführt. Weiterer Vorteil der Bandbremse ist ein gleichmäßiger Verschleiß des Reibbremsbelags über den gesamten Umfang, eine ungleichmäßige Abnutzung des Reibbremsbelags wird vermieden. Die erfindungsgemäße Bandbremse hat den Vorteil, dass sie zur Verwendung in Kraftfahrzeugen geeignet ist.

Die Spanneinrichtung zum Ausüben der Bandzugkraft auf das Bremsband weist eine schwimmende Lagerung auf. Dies bedeutet, dass die Spanneinrichtung in Umfangsrichtung oder tangentialer Richtung zum Bremskörper beweglich ist. Dadurch eignet sich die erfindungsgemäße Bandbremse für beide Drehrichtungen des Bremskörpers gleichermaßen, die Bremskraft der Bandbremse in Abhängigkeit von der auf das Bremsband ausgeübten Bandzugkraft ist für beide Drehrichtungen des Bremskörpers gleich. Die erfindungsgemäße Bandbremse eignet sich dadurch sowohl für Vor- wie für Rückwärtsfahrt, ihr Einbau im Kraftfahrzeug ist fahrt- und drehrichtungsunabhängig.

Die Unteransprüche haben vorteilhafte Ausgestaltungen und Weiterbildungen der im Anspruch 1 angegebenen Erfindung zum Gegenstand.

Anspruch 6 sieht einen Elektromotor zur Betätigung der Spanneinrichtung und somit zur Betätigung der erfindungsgemäßen Bandbremse vor. Durch die niedrige Betätigungskraft eignet sich die Bandbremse für eine elektromotorische Betätigung. Diese Ausgestaltung der Erfindung ermöglicht eine Ausrüstung eines Kraftfahrzeugs mit elektromotorisch betätigten Bremsen.

### Zeichnung

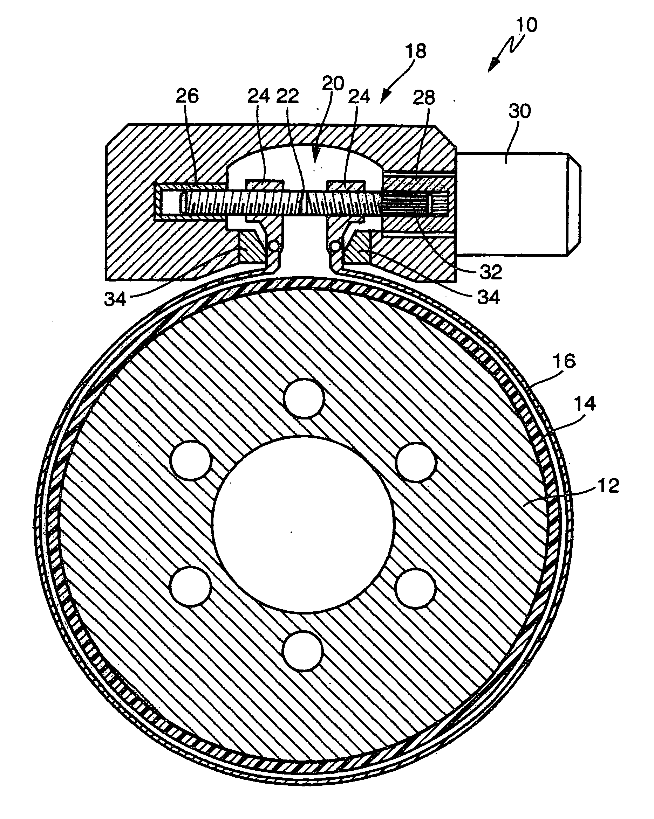

Die Erfindung wird nachfolgend anhand eines in der Zeichnung dargestellten Ausführungsbeispiels näher erläutert. Die einzige Figur zeigt eine Bandbremse gemäß der Erfindung. Die Zeichnung ist als schematisierte und vereinfachte Darstellung zu verstehen.

### Beschreibung des Ausführungsbeispiels

Die in der Zeichnung dargestellte, insgesamt mit 10 bezeichnete, erfindungsgemäße Bandbremse ist als Bremse für ein nicht dargestelltes Kraftfahrzeug, insbesondere für einen Kraftwagen, vorgesehen. Die Bandbremse 10 weist einen zylindrischen Bremskörper in Form einer Bremstrommel 12 auf. Auf einer Außenseite eines Umfangs der Bremstrommel 12 ist ein Reibbremsbelag 14 angeordnet. Ein Bremsband 16 beispielsweise aus Metall ist um nahezu den vollen Umfang außen um den Reibbremsbelag 14 herum geschlungen.

Zur Betätigung weist die erfindungsgemäße Bandbremse 10 eine Spanneinrichtung 18 auf, mit der eine Bandzugkraft auf beide Enden des Bremsbandes 16 ausübbar ist. Die Spanneinrichtung 18 weist ein als Spindeltrieb 20 ausgebildetes Schraubgetriebe auf. Der Spindeltrieb 20 weist eine Spindel 22 mit einem Rechts- und einem Linksgewinde auf. Auf das Rechtsgewinde und auf das Linksgewinde der Spindel 22 ist jeweils eine Mutter 24 mit einem Rechts- bzw. einem Linksgewinde aufgesetzt. Die Enden des Bremsbandes 16 sind mit je einer der beiden Muttern 24 verbunden. Durch Drehen der Spindel 22 lassen sich die beiden Muttern 24 aufeinander zu und voneinander weg verschieben und dadurch das Bremsband 16 spannen und lösen. Beim Spannen legt sich das Bremsband 16 an den Reibbremsbelag 14 an und übt eine Bremskraft auf die Bremstrommel 12 aus.

Die Spanneinrichtung 18 weist eine schwimmende Lagerung 26, 28 für den Spindeltrieb 20 auf, die Spindel 22 ist in tangentialer Richtung zur Bremstrommel 12 beweglich. Zur schwimmenden Lagerung ist ein Ende der Spindel 22 dreh- und axial verschiebbar in einem Spindellager 26 gelagert. Das andere Ende der Spindel 22 liegt in einer Muffe 28 ein, die drehfest auf eine Welle eines Elektromotors 30 aufgesetzt ist. Mittels eines Kerbzahnprofils 32 ist die Spindel 22 drehfest und axial verschieblich mit der Muffe 28 verbunden. Mit dem Elektromotor 30 ist die Spindel 22 drehend antreibbar und das Bremsband 16 dadurch spann- und lösbar. Die Betätigung der erfindungsgemäßen Bandbremse 10 erfolgt somit elektromotorisch.

Die Bandbremse 10 weist zwei Anschläge 34 auf, die einen Verschiebeweg der schwimmend gelagerten Spindel 22 begrenzen und dadurch den Spindeltrieb 20 gegen Mitdrehen mit der Bremstrommel 12 sichern. Die beiden Anschläge 34 sind aneinander abgewandten Außenseiten der Muttern 24 angeordnet. Werden zur Betätigung der Bandbremse 10 die beiden Muttern 24 durch Drehen der Spindel 22 auf einander zu bewegt und das Bremsband 16 dadurch an den Reibbremsbelag 14 gespannt, nimmt die drehende Bremstrommel 12 das Bremsband 16 in Drehrichtung mit. Dabei wird die schwimmend gelagerte Spindel 22 in ihrer Längsrichtung verschoben. Die Mutter 24 an einem auflaufenden Ende des Bremsbandes 16 oder dieses Ende des Bremsbandes 16 stoßen gegen den zugeordneten Anschlag 34, wodurch die Verschiebung der Spindel 22 beendet und das auflaufende Ende des Bremsbandes 16 gegen weiteres Mitdrehen mit der Bremstrommel 12 gehalten ist. Beim weiteren Spannen des Bremsbandes 16 wird die Mutter 24 an einem ablaufenden Ende des Bremsbandes 16 auf die Mutter 24 am auflaufenden Ende des Bremsbandes 16 zu bewegt, die am zugeordneten Anschlag 34 anliegt. Bei umgekehrter Drehrichtung der Bremstrommel 12 verschiebt sich die Spindel 22 in entgegengesetzter Richtung, das Spannen des Bremsbandes 16 und die Betätigung der Bandbremse 10 erfolgen in gleicher Weise. Die Betätigung der Bandbremse 10 ist drehrichtungsunabhängig.

## Patentansprüche

1. Bandbremse, mit einem zylindrischen Bremskörper (12), der einen Reibbremsbelag (14) an einem Umfang aufweist, mit einem um den Bremskörper (12) geschlungenen Bremsband (16), und mit einer Spanneinrichtung (18) zum Spannen des Bremsbandes (16), **dadurch gekennzeichnet, dass** die Spanneinrichtung (18) eine schwimmende Lagerung (26, 28) aufweist.

2. Bandbremse nach Anspruch 1, **dadurch gekennzeichnet, dass** die Bandbremse (10) einen Anschlag (34) als Sicherung gegen Mitdrehen der Spanneinrichtung (20) mit dem Bremskörper (12) aufweist.

3. Bandbremse nach Anspruch 2, **dadurch gekennzeichnet, dass** die Bandbremse (10) für jede Drehrichtung des Bremskörpers (12) einen Anschlag (34) als Sicherung gegen Mitdrehen der Spanneinrichtung (18) mit dem Bremskörper (12) aufweist.

4. Bandbremse nach Anspruch 4, **dadurch gekennzeichnet, dass** die Spanneinrichtung (18) ein Schraubgetriebe (20) aufweist.

5. Bandbremse nach Anspruch 5, **dadurch gekennzeichnet, dass** das Schraubgetriebe (20) ein Rechts- und ein Linksgewinde sowie eine Rechts- und eine Linksgewindemutter (24) aufweist, wobei jede der beiden Muttern (24) an einem Ende des Bremsbandes (16) angreift.

6. Bandbremse nach Anspruch 1, **dadurch gekennzeichnet, dass** die Bandbremse (10) einen Elektromotor (30) zur Betätigung der Spanneinrichtung (18) aufweist.

## Claims

1. Band brake, having a cylindrical brake body (12) which has a friction brake lining (14) at a periphery, having a brake band (16) which is looped around the brake body (12), and having a tensioning device (18) for tensioning the brake band (16), **characterized in that** the tensioning device (18) has a floating bearing (26, 28).

2. Band brake according to Claim 1, **characterized in that** the band brake (10) has a stop (34) as a securing device to prevent the tensioning device (18) from rotating with the brake body (12).

3. Band brake according to Claim 2, **characterized in that** the band brake (10) has a stop (34) as a securing device to prevent the tensioning device (18) from rotating with the brake body (12) for each rotational direction of the brake body (12).

4. Band brake according to Claim 4, **characterized in that** the tensioning device (18) has a helical gear mechanism (20).

5. Band brake according to Claim 5, **characterized in that** the helical gear mechanism (20) has a right-hand thread and a left-hand thread and also a right-hand-threaded nut and a left-hand-threaded nut (24), each of the two nuts (24) engaging on an end of the brake band (16).

6. Band brake according to Claim 1, **characterized in that** the band brake (10) has an electric motor (30) for actuating the tensioning device (18).

## Revendications

1. Frein à bande comportant un corps de frein cylindrique (12) muni à sa périphérie d'une garniture de frein à friction (14) et une bande de frein (16) enveloppant le corps de frein (12) ainsi qu'une installation de tension (18) pour tendre la bande de frein (16),
**caractérisé en ce que**
l'installation de tension (18) est montée flottante (26, 28).

2. Frein à bande selon la revendication 1,
**caractérisé en ce qu'**
il (10) comporte une butée (34) pour bloquer l'entraînement en rotation de l'installation de tension (18) par le corps de frein (12).

3. Frein à bande selon la revendication 2,
**caractérisé en ce qu'**
il (10) comporte une butée (34) pour chaque sens de rotation du corps de frein (12), comme protection contre l'entraînement en rotation de l'installation de tension (18) par le corps de frein (12).

4. Frein à bande selon la revendication 3,
**caractérisé en ce que**
l'installation de tension (18) comporte une transmission à vis (20).

5. Frein à bande selon la revendication 4,
**caractérisé en ce que**
la transmission à vis (20) comporte un filetage à droite et un filetage à gauche ainsi qu'un écrou à filetage à gauche et filetage à droite et chacun des deux écrous (24) coopère avec une extrémité de la bande de frein (16).

6. Frein à bande selon la revendication 1,
**caractérisé en ce qu'**
il (10) comporte un moteur électrique (30) pour actionner l'installation de tension (18).
